## Europäisches Patentamt
## European Patent Office
## Office européen des brevets

(11) Publication number: **0 042 245**
**B1**

(12) **EUROPEAN PATENT SPECIFICATION**

(45) Date of publication of patent specification: **28.11.84**

(51) Int. Cl.³: **G 01 F 11/24, A 01 D 41/12**

(21) Application number: **81302547.5**

(22) Date of filing: **09.06.81**

(54) Crop metering device for combine harvesters.

(30) Priority: **14.06.80 GB 8019521**
**26.03.81 GB 8109432**

(43) Date of publication of application:
**23.12.81 Bulletin 81/51**

(45) Publication of the grant of the patent:
**28.11.84 Bulletin 84/48**

(84) Designated Contracting States:
**BE DE FR IT**

(56) References cited:
**DE-A-2 233 711**
**DE-A-2 527 090**
**DE-A-2 658 820**
**FR-A- 725 905**
**FR-A-2 003 295**
**FR-A-2 126 702**
**GB-A- 476 049**
**US-A-1 875 725**
**US-A-2 748 601**
**US-A-3 939 846**

(73) Proprietor: **Claydon Yield-O-Meter Limited**
**136 High Street**
**Newmarket Suffolk (GB)**

(72) Inventor: **Claydon, Jeffrey Thomas**
**Gaines Hall Wickhambrook**
**Newmarket, Suffolk (GB)**

(74) Representative: **Stone, Patrick**
**28 Edenside Drive**
**Attleborough Norfolk NR17 2EL (GB)**

Courier Press, Leamington Spa, England.

# Description

This invention relates to a crop metering device for combine harvesters.

When a crop is harvested with a combine harvester, the operator is not readily able to determine the amount of clean crop being gathered in relation either to the area of ground being covered or the time being spent. This can only be determined subsequently, by physically weighing the crop obtained over a measured acreage during a given period of time. The only assistance given in this respect is by an area indicator, which is provided in some combine harvesters to provide a cumulative measure of the acreage which has been harvested.

At the present time, however, with various aids in the way of fertilisers and weed, pest and disease controllers available to farm management, it is very frequently required to subdivide the total area of the crop into smaller areas, e.g. by use of tramlining techniques, which smaller areas are treated differently from one another to test the effect of differing amounts and differing types of chemical aids. The results of differing treatments can only properly be assessed by the crop yield, but with existing crop measuring techniques it is extremely difficult for a farmer accurately to determine by experiment the treatment or treatments which are best suited to his land and farming methods.

In the prior art, U.K. Specification No. 1378715 discloses an arrangement in which, for example by the use of collecting containers together with sensors for measuring the extents of filling thereof, the quantity of harvested material is compared with the quantity ejected to waste. Analogously, in U.K. Specification No. 1270535 two compartments are alternately supplied with grain for predetermined periods and optical sensors are used to detect the extents to which the compartments are filled.

In U.S. Specification No. 1875725, there is disclosed a crop metering device in the form of a rotary paddle wheel which is actuated to release known volumes of crop when the weight of corn in and above the wheel builds up to a sufficient extent. Even if use of the device is restricted to corn, the harvested material can vary in density to such an extent, e.g. according to its moisture content, that it cannot be reliably ensured that the paddle wheel compartments are completely full before the wheel is driven to release the corn.

According to the present invention, there is provided a crop metering device for combine harvesters, located in the clean crop flow, and comprising a rotary paddle wheel and a volumetric metering means for sensing the paddle wheel revolutions, said paddle wheel being divided by vanes into a plurality of compartments of known equal volume, said paddle wheel receiving crop from above and discharging successive known volumes of crop downwardly when the paddle wheel rotates responsively to an excess of crop above the paddle wheel, said paddle wheel forming a trap in the path of the clean crop flow between fixed inlet and outlet chutes, characterised by a height sensor for making physical contact with the crop, said sensor being located at a predetermined position in the inlet chute above the paddle wheel, and by a drive means for the paddle wheel, said drive means being actuated to drive said paddle wheel as long as the sensor is actuated due to contact with the crop forming a minimum head thereof above the paddle wheel.

Conversion of volume to weight can be effected by manually weighing a given small volume of crop and proportionately scaling the volumetric output of the volumetric metering means. This conversion may be effected electronically by feeding the preliminary weight measurement into a calculator. Alternatively, in accordance with another aspect of an embodiment of the invention, this volume to weight conversion may be effected automatically by weighing the small volume of crop within the harvester itself and feeding this output into a calculator which already receives the volumetric measurements from the volumetric metering means.

Thus, in accordance with this embodiment of the present invention, a portion of the clean crop flow is diverted into a weighing device which comprises a chamber of known volume which is filled with the crop, a load cell at the bottom of the chamber to provide an output signal for a predetermined time period while the chamber is full, means for integrating said output signal to derive a measure of the weight of the crop in the filled chamber, and means for releasing the crop from said chamber back to the clean crop flow after completion of the predetermined measuring period.

In a preferred embodiment, the chamber is suspended to load the weight of the chamber on to the load cell, which is zeroed for the weight of the chamber when empty. Less desirably, the load cell may be loaded under a suspended bottom plate to the chamber, in which case a roller mounting of the complete chamber may be retained to reduce sensitivity of the device to vibration.

Preferably, a static volume of crop is maintained in the weighing chamber during the period of measurement, and to this end the chamber may include a high level, chamber-full, sensor and a low level, chamber-empty, sensor, and a top inlet to and a bottom outlet from the chamber may be controlled by a shutter means activated by the sensors. The high level sensor can also conveniently be used to initiate the measuring period, while opening of the bottom outlet may be controlled by a signal fed back from the integrator at the end of the measuring period. This period may be as little as a few seconds, or may be a number of minutes.

The automatic weighing device enables the user regularly to monitor the weight of crop being harvested, which can vary from one time to another owing, for example, to varying moisture content, which can cause one volume of crop to weigh differently to a subsequent equal volume.

Conventionally, corn measurements are based on a moisture content of 16% or less. Thus, according to another aspect of the invention, the weighing chamber may include an electrical resistance pad for measuring the moisture content of the corn static in the chamber during the measurement period. The resistance pad may provide an output signal fed to the calculator receiving the output of the integrator in order to supply a moisture content correction thereto.

It is envisaged that the crop metering device of the invention will be applied to a harvester also equipped with a ground area indicator and a mini-computer will be provided in the cab with a read-out which will make available, in addition to the area indication, indications of any one or more of the cumulative crop volume and/or weight, the cumulative volume and/or weight per unit ground area, the current (i.e. running) volume and/or weight per unit ground area, and the area and crop volume and/or weight harvested per unit time.

Further features of the invention will be apparent from the following description of some practical embodiments of the invention, referring to the accompanying drawing, in which:

Figure 1 diagrammatically indicates the layout of a typical combine harvester;

Figure 2 shows a practical embodiment of the volume metering device of the invention in diagrammatic form; and

Figure 3 shows a weighing device attached to one side of a volume metering device.

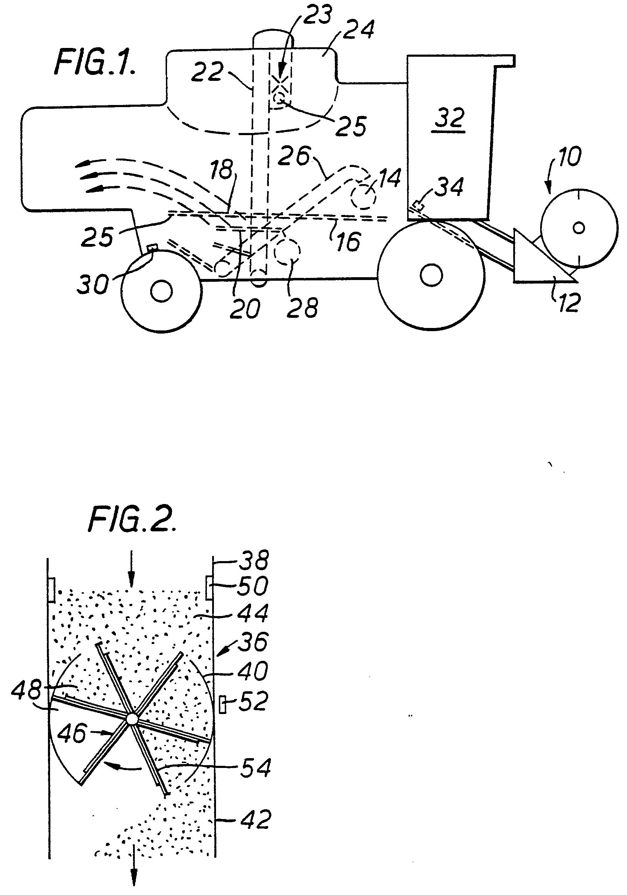

In the typical harvester of Figure 1, the crop is cut by a front cutter-assembly 10 including a cutter bar 12, which can be retracted upwardly to stop harvesting when necessary, e.g. when the harvester is turning at the edges of a field or is being manoeuvred. The cut crop is taken to a thresher 14, thence dropping on to a shaker assembly 16 leading rearwardly to an upper sieve 18 from which the clean crop drops through a lower sieve 20 (sieve pan) on to a main elevator 22 which lifts the clean crop to an exit from which the crop falls into a reservoir 24 (tank). Partially cleaned crop not passing through the first part of the upper sieve 18 passes to a larger mesh sieve 25 from which this material falls onto a secondary conveyor 26, which also receives partially cleaned crop rejected by the sieve pan 20, whence this material is recycled through the thresher 14. A blower 28 below the sieves blows chaff or like lightweight rejected material out of an exit at the rear of the harvester.

The metering device of the present invention can be located anywhere in the clean crop flow between the sieve pan 20 and the tank 24, i.e. between the sieve pan 20 and the main elevator 22, at a break in a two-part main elevator 22, or between the exit from the main elevator 22 and the tank 24. In Figure 1, the metering device, generally referenced 23, is shown located at the top of the main elevator 22 above a tank elevator 25.

It is proposed that the crop metering device will be used with an area indicator, conveniently of a conventional kind which comprises a revolution sensor 30 on a rear wheel of the harvester, a computer/indicator (e.g. a counter with digital read-out) in the cab 32 which can be programmed for cut width, and an on/off cutter bar sensor 34 operative to interrupt area measurement when the cutter bar 12 is raised.

One embodiment of the metering device of the invention is shown in Figure 2. This device, generally designated 36, has a vertical inlet chute 38 receiving the total flow of clean crop from the direction of the sieve tank (e.g. at the main elevator outlet), a cylindrically shaped trap 40 fed through the inlet chute 38, and an outlet chute 42 discharging released and metered crop into or towards the reservoir tank (e.g. via the tank elevator). The crop 44 is metered by the combination of a paddle wheel or rotary vane assembly 46 within the cylindrical trap 40, which vane assembly subdivides the trap into a plurality of equal compartments or segments 48, together with a pressure sensor 50 (preferably one on each side) in the inlet chute 38. The vane assembly 46 is driven in rotation (by a belt drive or other mechanical, electrical or hydraulic transmission taken or derived from a power take-off on the harvester) only when the pressure sensor 50 is operatively switched on due to the pressure of crop accumulated in the inlet chute 38. When the vane assembly 46 is driven, one or more compartments 48, previously filled with crop from the inlet chute 38, are emptied through the outlet chute 42. At the same time, empty following compartments 48 are filled from the inlet chute 38, so that the crop level falls in the said inlet chute below the level of the sensor 50, which is thus switched off, whereby the vane assembly 46 is stopped. Crop then builds up again in the inlet chute 38.

Obviously, the pressure sensor 50 can be replaced by a photoelectric sensor or any other kind of sensor capable of sensing that the crop has built up to a predetermined level in the inlet chute 38 and of providing an output for initiating operations of the vane assembly 46.

In accordance with the invention, the compartments 48 of the trap 40 have a predetermined known volume, and the revolutions (or given partial revolutions) of the vane assembly 46 are counted. Preferably but not essentially the revolutions of the vane assembly 46 are sensed by a magnetic or electronic switch 52, which supplies one electrical pulse for each one or for each of a plurality of compartments from which the crop is released. If, for example, the switch is a revolution counter such that one pulse is produced per complete revolution of the vane assembly, each pulse will represent a flow into a tank of a volume of crop equal to six times the known volume of an individual compartment 48. The essential requirement for accuracy is that crop will only be released out of completely filled compartments 48 in the trap 40, and it is desirable for this reason to locate the pressure sensor 50 some distance above the trap, so that a greater or lesser head of crop will remain in the inlet chute (38) above the trap 40 at all times.

It is envisaged that the individual vanes 54 of the vane assembly 46 will be metal backed nylon plates to ensure relatively tight engagement with the cylindrical wall of the trap 40 sufficient to prevent leakage, whilst offering sufficient flexibility to yield under a pressure which could otherwise cause jamming, as might arise due to the presence of small stones or other foreign bodies in the nominally clean crop flow. Vanes 54 comprising metal plates faced with rubber at their outer edges may alternatively be employed, or possibly the wall of the trap may be resiliently mounted in the chute 38, 42 to minimise risk of jamming.

In the driving cab, a mini-computer will incorporate the conventional area indicator and will receive the electrical pulses from the revolution sensing switch 52. This computer will have a digital read-out, and be programmed in a permanent memory for calculating functions and a volatile memory for variable factors such as volume to weight converters. The latter conversion is dealt with later in connection with a crop weighing device which may be used in conjunction with the volume meter. Three digital readouts are envisaged, one for area, one for volume and/or weight, and one (possibly longer) for selective display of any of the possible computed measurements which have previously been mentioned.

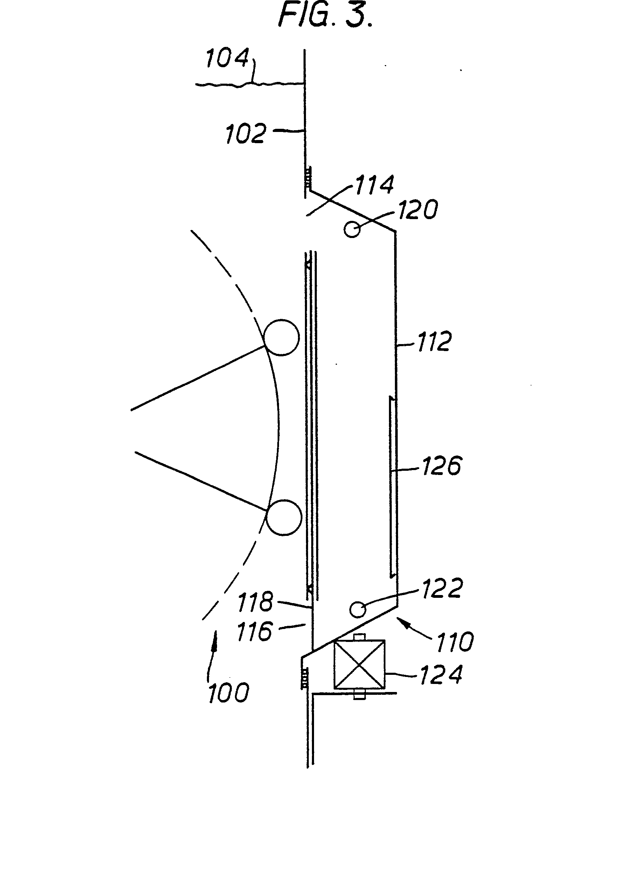

Referring now to Figure 3, a volume metering device, designated 100, is generally in accordance with the embodiment above described with reference to Figure 2. As already explained, the metering device 100 supplies through the volumetric metering means 52 (see Figure 2) an electrical output to a calculator or computer (in the harvester cab) which can provide to a visual display a measure of the volume of corn being harvested. A computer can be input with a weight conversion factor determined by manual measurement of the weight of a small known volume of corn. However, the device of Figure 3 enables a volume to weight conversion to be effected automatically during metering of the crop.

The weighing device of Figure 3 is generally designated 110, and comprises a chamber 112 mounted to the side of the volumetric meter 100. The chamber 112 is mounted to the side wall 102 of the volumetric meter 100 through suspension rollers which allow a limited up and down movement of the chamber, including all components carried by it, effectively to load the weight of the chamber on to a load cell 124 fixedly mounted beneath the chamber.

The chamber 112 has a top inlet 114 from the head of crop 104 above the volumetric meter 100, and a bottom outlet 116 back to the clean crop flow below said meter 100. Opening and closing of the inlet 114 and outlet 116 is effected by a shutter 118 movable up and down by an electromagnetic drive (not shown). Suitable means will be employed to prevent any crop becoming trapped in the narrow clearances between the inner wall of the volume meter 100, the shutter 118 and the inner wall of the weighing device. The shutter 118, it is to be noted, is carried by the main framework of the chamber 112 to be suspended therewith on the above-mentioned roller mounting.

Within the chamber 112 is a high level, chamber-full sensor 120 and a low level, chamber-empty sensor 122.

When the chamber 122 fills to the level of the sensor 120, integration of an electrical output of the load cell 124 is automatically initiated. Directly or indirectly, the load cell 124 is zeroed for an empty chamber 112, so that its measured output depends on the weight of crop in the filled chamber.

At the end of a predetermined time period, integration of the load cell output is terminated and a signal is fed back to the electromagnetic drive for the shutter 118, so that the shutter is lifted, thereby opening the bottom outlet 116 and closing the top inlet 114. The chamber 112 empties, and when empty the sensor 122 provides a signal to the shutter device for dropping the shutter, thus opening the top inlet and closing the bottom outlet. When a full chamber 112 is again sensed, a subsequent weighing measurement can take place.

The output of the integrator (not shown) is fed to a computer in the harvester cab which already receives a signal representing volume output, and a volume to weight conversion is effected to enable a weight measure of the crop being harvested to be displayed on the display device (conveniently an LED or LCD binary display unit).

Moisture content correction may be effected automatically in the computer by means of a moisture content signal fed from a resistance pad 126 located with the chamber 112. The moisture content signal is taken into account during the measuring period, when the crop is static within the chamber 112.

One particular point which should be mentioned in connection with the described arrangement is that integration of the load cell output over a reasonable time period is desirable to avoid or at least minimise errors due to vibration when the harvester is operational. The predetermined period will be selected to minimise such errors, and generally will not be less than a few seconds nor greater than a number of minutes. A shorter period possibly with increased risk or errors enables the weight of corn being harvested to be monitored more frequently, so that variations from one small area of a harvested field to another may be more readily detected. Generally speaking, however, it is variations between larger harvested areas which are more significant and the ability to be able to check the crop yield every few minutes is the maximum requirement.

Various modifications of the described arrangement of Figure 3 are possible within the scope of the invention. In particular, the term "load cell" as used herein should be broadly construed to include any convenient measuring device capable of producing an output dependent on the weight of the load to which it is subjected, such for example as a strain gauge. Again, in the described embodiment, one side of the load cell is fixedly mounted. However, this is not an essential requirement. It is possible, for example, to incorporate a counterweight or counterbalancing mechanism in the system to balance the weight of the weighing chamber, so that the load cell is subjected only to the weight of the crop. Such a modification may entail mounting at least one side of the load cell to a member forming part of the counter-balancing mechanism.

**Claims**

1. A crop metering device for combine harvesters, located in the clean crop flow, and comprising a rotary paddle wheel (46) and a volumetric metering means (52) for sensing the paddle wheel revolutions, said paddle wheel being divided by vanes into a plurality of compartments (48) of known equal volume, said paddle wheel receiving crop (44) from above and discharging successive known volumes of crop downwardly when the paddle wheel rotates responsively to an excess of crop above the paddle wheel, said paddle wheel (46) forming a trap (40) in the path of the clean crop flow between fixed inlet (38) and outlet (42) chutes, characterized by a height sensor (50) for making physical contact with the crop (44), said sensor being located at a predetermined position in the inlet chute above the paddle wheel, and by a drive means for the paddle wheel, said drive means being actuated to drive said paddle wheel as long as the sensor is actuated due to contact with the crop forming a minimum head thereof above the paddle wheel.

2. A device according to claim 1, characterised by means for weighing a small known volume of the crop (44) and a calculating means for receiving measurement signals both from the volumetric metering means (52) and from said weighing means (110) and for converting the volumetric measurement into a measurement by weight.

3. A device according to claim 2, characterised in that the weighing means (110) comprises a chamber (112) of known volume which is filled with successive samples of the crop, a load cell (124) at the bottom of the chamber to provide an output signal for a predetermined time period while the chamber is full, means for integrating said output signal to derive a measure of the weight of crop in the filled chamber, and means for releasing the crop from said chamber after completion of the predetermined measuring period.

4. A device according to claim 2 or claim 3, characterised by a moisture content measuring means (126) in the chamber (112) from which is derived a correction signal for the measured weight.

5. A device according to claim 3 or to claim 4 when appendant to claim 3, characterised in that the weighing chamber (112) has a high level, chamber-full sensor (120) and a low level, chamber-empty sensor (112), a top inlet (114), a bottom outlet (116), and a shutter means (118) activated by the high and low level sensors to control said inlet and outlet, the high level sensor being operative to initiate the measuring period and opening of the bottom outlet being initiated by a signal fed back from the integrating means at the end of the measuring period.

6. A device according to any of claims 1 to 5, characterised by a ground area meter, a computing means fed with measurement signals from said ground area meter and the volumetric metering means (52) for computing the volumetric crop yield per unit ground area, and a display unit in the cab of the harvester fed with the output of said computing means.

**Revendications**

1. Dispositif de mesure de récolte pour moissonneuses-batteuses, situé dans l'écoulement de la récolte propre et comprenant une roue à palettes rotative (46) et un dispositif de mesure volumétrique (52) servant à détecter le nombre de rotations de la roue à palettes, dont les palettes délimitent une pluralité de compartiments (48) d'un même volume connu et qui reçoit la récolte (44) par le haut et évacue des volumes successifs connus de récolte vers le bas lorsqu'elle tourne en réponse à un excès de récolte situé au-dessus d'elle-même, ladite roue à palettes (46) formant un collecteur (40) sur le trajet de l'écoulement de la récolte propre entre un conduit d'entrée (38) et un conduit de sortie (42), caractérisé par un détecteur de hauteur (50) destiné à établir un contact physique avec la récolte (44), ledit détecteur étant situé dans une position prédéterminée au-dessus de la roue à palettes dans le conduit d'entrée, et par un dispositif d'entraînement de la roue à palettes, qui est actionné de manière à entraîner cette dernière tant que le détecteur est actionné par suite du contact avec la récolte disposée sur une hauteur minimum au-dessus de la roue à palettes.

2. Dispositif selon la revendication 1, caractérisé par un dispositif de pesée d'un faible volume connu de la récolte (44) et par un dispositif de calcul servant à recevoir les signaux de mesure à la fois du dispositif de mesure volumétrique (52) et dudit dispositif de pesée (110) et servant à convertir la mesure volumétrique en une mesure pondérale.

3. Dispositif selon la revendication 2, caractérisé en ce que le dispositif de pesée (110) comporte une chambre (112) de volume connu, qui est remplie par des échantillons successifs de la récolte, une cellule de charge (124) dans la partie inférieure de la chambre de manière à délivrer un signal de sortie pendant un intervalle de temps prédéterminé lorsque la chambre est pleine, un dispositif servant à intégrer ledit signal de sortie afin d'en dériver une mesure du poids de la récolte située dans la chambre remplie, et un dispositif servant à libérer la récolte de ladite chambre une fois écoulé l'intervalle de temps prédéterminé de mesure.

4. Dispositif selon la revendication 2 ou 3, caractérisé par un dispositif (126) de mesure du degré d'humidité situé dans la chambre (112) et à partir duquel est dérivé un signal de correction pour le poids mesuré.

5. Dispositif selon la revendication 3 ou la revendication 4 si elle dépend de la revendication 3, caractérisé en ce que la chambre de pesée (112) possède un détecteur (120) de l'état rempli de la chambre, situé à un niveau élevé, et un détecteur (122) de l'état vide de la chambre, situé à un niveau .bas, une entrée supérieure (114), une sortie inférieure (116) et un dispositif obturateur (118) actionné par les détecteurs situés à un niveau élevé et à un niveau bas de manière à commander ladite entrée et ladite sortie, le détecteur situé au niveau élevé étant apte à faire démarrer la période de mesure, et l'ouverture de la sortie inférieure étant déclenchée par un signal renvoyé par le dispositif d'intégration à la fin de la période de mesure.

6. Dispositif selon l'une quelconque des revendications 1 à 5, caractérisé par un appareil de mesure de la surface au sol, un dispositif de calcul alimenté par les signaux de mesure provenant dudit dispositif de mesure de la surface au sol et du dispositif de mesure volumétrique (52) afin de calculer le rendement volumétrique de la récolte par unité de surface au sol, et une unité d'affichage située dans la cabine de la moissonneuse-batteuse et alimentée par la sortie dudit dispositif de calcul.

## Patentansprüche

1. Körnermeßeinrichtung für Mähdrescher, die in dem Reingetreidestrom angebracht ist und eine drehbares Flügelrad (46) und ein volumetrisches Meßgerät (52) zur Messung der Flügelradumdrehungen enthält, bei der das Flügelrad mit Hilfe von Flügeln in einer Mehrzahl von Kammern (48) bekannten, jeweils gleichen Volumens aufgeteilt ist, von oben Körner erhält und nacheinander bekannte Volumina an Körnern abwärts leitet, wenn das Flügelrad sich in Abhängigkeit von einem Körnerüberschuß oberhalb des Flügelrades dreht, wobei das Flügelrad (46) eine Auffangstelle (40) in dem Weg des Reingetreidestromes zwischen starren Einlaß- (38) und Auslaßrutschen (42) bildet, gekennzeichnet, durch einen Höhenfühler (50) zur Herbeiführung eines physischen Kontaktes mit den Körnern (44), wobei der Fühler an einer vorgewählten Stelle in der Einlaufrutsche oberhalb des Flügelrades angeordnet ist, und durch einen Antrieb für das Flügelrad, der so lange zur Bewegung des Flügelrades betätigt ist, wie der Fühler durch den Kontakt mit den Körnern betätigt ist, wodurch eine minimale Körnerhöhe über dem Flügelrad gebildet wird.

2. Meßeinrichtung nach Anspruch 1, gekennzeichnet durch eine Einrichtung zum Wiegen eines Kleinen bekannten Volumens von Körnern (44) und einen Rechner zur Verarbeitung von Meßsignalen sowohl von dem volumetrischen Meßgerät (52) als auch von der Wiegeeinrichtung (110) und zur Umsetzung der Volumenmessung in eine Gewichtsmessung.

3. Meßeinrichtung nach Anspruch 2, dadurch gekennzeichnet, daß die Einrichtung zum Wiegen (110) eine Kammer (112) bekannten Volumens, die mit nacheinander folgenden Kornproben gefüllt wird, eine Lastzelle (124) am unteren Ende der Kammer, die für eine vorbestimmte Zeit, während der die Kammer gefüllt ist, ein Ausgangssignal abgibt, Mittel zur Integrierung des Ausgangssignals, um eine Gewichtsmessung der Körner in der gefüllten Kammer abzuleiten sowie Mittel zur Entleerung der Körner aus der Kammer nach Ablauf der vorgegebenen Meßperiode enthält.

4. Meßeinrichtung nach Anspruch 2 oder 3, gekennzeichnet durch eine Feuchtigkeitsgehalts-Meßeinrichtung (126) in der Kammer (112), von der ein Korrektursignal für das gemessene Gewicht abgeleitet ist.

5. Meßeinrichtung nach Anspruch 3 oder 4, wenn von Anspruch 3 abhängig, dadurch gekennzeichnet, daß die. Wiegekammer (112) einen oberen Kammer-Voll-Fühler (120) und einen unteren Kammer-Leer-Fühler (122), einen oberen Einlaß (114), einen unteren Auslaß (116) und eine Schließeinrichtung (118) aufweist, die von den oberen und unteren Sensoren zur Steuerung des Einlasses und des Auslasses betätigt wird, wobei der obere Fühler die Meßperiode in Lauf setzt und das Öffnen des unteren Auslasses durch einen Signalrückfluß von den Mitteln zur Integrierung am Ende der Meßperiode bewirkt wird.

6. Meßeinrichtung nach einem der Ansprüche 1 bis 5, gekennzeichnet, durch einen Grundflächenmesser, einen Rechner, der mit Meßsignalen des Grundflächenmessers und dem volumetrischen Meßgerät (52) zur Berechnung des volumetrischen Kornertrages pro Grundflächeneinheit gespeist wird, und durch eine Anzeigevorrichtung in der Kabine des Mähdreschers, die mit dem Ausgangssignal des Rechners gespeist wird.

FIG.1.

FIG.2.

1

# FIG. 3.